# EUROPEAN PATENT SPECIFICATION

(11) **EP 2 500 079 B1**
(45) Date of publication and mention of the grant of the patent: **11.06.2014**
(21) Application number: 12159404.8
(22) Date of filing: 14.03.2012
(51) Int. Cl.: B01D 46/24

(54) **Honeycomb structure**
Wabenstruktur
Structure en nid d'abeille

(30) Priority: 18.03.2011 JP 2011060391
(43) Date of publication of application: 19.09.2012
(73) Proprietor: NGK Insulators, Ltd., Nagoya-shi, Aichi 467-8530 (JP)
(72) Inventor: Hirose, Shogo, Nagoya-shi, Aichi 467-8530 (JP); Hirakawa, Toshihiro, Nagoya-shi, Aichi 467-8530 (JP)
(74) Representative: Paget, Hugh Charles Edward

(56) References cited:
- EP-A1- 1 977 810
- JP-A- 2007 275 873
- US-A1- 2007 148 405
- US-A1- 2007 148 406

## Description

### TECHNICAL FIELD

The present invention relates to a honeycomb structure. More particularly, the present invention relates to a honeycomb structure used for purification of the exhaust gas emitted from an internal combustion engine. The present invention relates particularly to a honeycomb structure having hexagonal cells, which has both temperature elevation property and mechanical strength, can be made low in the catalyst amount used and can have a large area for catalyst loading.

### BACKGROUND ART

A honeycomb structure is in wide use as a catalyst carrier used for purification of the exhaust gas emitted from an internal combustion engine. It is used as TWC (three way catalyst) carrier for gasoline engine, LNT carrier (NOx occlusion and reduction catalyst), DOC carrier (DOC: diesel oxidation catalyst), or SCR carrier (SCR: catalyst for NOx selective reduction).

In the above-mentioned TWC carrier, LNT carrier, DOC carrier, or SCR carrier, however, there is a tendency that the thickness of cell partition wall is made smaller and the amount of catalyst used is made larger in order to respond to the stricter regulation. It invites a higher cost and, for reduction thereof, a higher performance honeycomb is required.

As the higher performance honeycomb, there can be mentioned a honeycomb structure in which the cell sectional shape has been changed from a tetragon to a hexagon. In this honeycomb structure, a catalyst can be coated uniformly and the effective use of expensive catalyst is possible, whereby the amount of catalyst used can be reduced.

In the above honeycomb structure of hexagonal cell section, however, the number of the sides constituting each cell is larger, inviting easy cell twist. Particularly when this cell twist occurs in cells (partial cells) contacting with the outer peripheral wall of honeycomb structure and accordingly having incomplete sectional shapes, there has been a problem such as breakage of product starting from the partial cells, during canning.

There have been investigated techniques for reinforced structure, for example, a structure in which the partition wall thickness is made larger in several cells present in the vicinity of the outer peripheral wall. However, this structure had, for example, a problem that the several cells in the vicinity of the outer peripheral wall have a higher heat capacity, resulting in a lower performance.

In the above investigations, a honeycomb structure of the following Patent Document 1 was proposed. In the Patent Document 1 was proposed a honeycomb structure of hexagonal cell in which the area of catalyst loading can be made larger than in the honeycomb structure of tetragonal cell and the purification performance of exhaust gas is higher.

### PRIOR ART DOCUMENT

### [Patent Document]

Patent Document 1: JP-A-2007-196212

The document JP2007 275873 describes honeycombs having a mixture of reinforced and standard cells.

### SUMMARY OF THE INVENTION

### Problem to Be Achieved by the Invention

In the honeycomb structure described in the Patent Document 1, however, cell twist tents to appear as compared with the case of tetragonal cell and, therefore, there is no improvement with respect to the cell twist. Moreover, in the honeycomb structure of the Patent Document 1, the thickness of cell partition wall is smaller, resulting in lower mechanical strength. Therefore, it is still difficult to enhance both the temperature elevation property and mechanical strength of honeycomb structure.

The present invention has been made in view of the above situation. The problem of the present invention is to provide a honeycomb structure which is improved in isotactic fracture strength and thermal shock resistance. Means for Achieving the Problem

The present invention provides the following honeycomb structure.

A honeycomb structure comprising porous partition walls forming a plurality of cells extending between the two end faces and an outer peripheral wall formed integrally with the partition walls, wherein the cells comprise complete cells having a hexagonal, complete cell section and partial cells present at the outermost portion of the plurality of cells and having an incomplete cell section not forming a hexagon, the honeycomb structure satisfying at least one of following (1) to (4).
(1) The partition walls of partial cells, contacting with the outer peripheral wall are formed so as to have a larger thickness than other partition walls.
(2) The partition walls of partial cells, contacting with the outer peripheral wall are formed so as to have a thickness which is larger than other partition walls constituting the partial cells and which increases gradually toward the direction of the outer peripheral wall.
(3) Intersection points between the partition wall of partial cell and the partition wall of complete cell, present at the starting points of the partial cell partition walls which extend toward the outer peripheral wall and are shorter than the complete cell partition walls, are incomplete intersection points and are formed so as to have a roundish sectional shape.
(4) Intersection points between the outer peripheral wall and the partial cell partition wall are outermost intersection points and are formed so as to have a roundish sectional shape.

A honeycomb structure according to [1], wherein the value obtained by dividing the average thickness w (mm) of partial cell partition walls by the average thickness t (mm) of complete cell partition walls is 2.0 < w/t < 4.0.

A honeycomb structure according to [1] or [2], wherein the outermost intersection point ratio r1 obtained by dividing the average diameter (mm) of intersection point inscribed circles, which are inscribed circles at outermost intersection points, by the average thickness (mm) of complete cell partition walls is 2.0 < r1 < 4.0.

A honeycomb structure according to any of [1] to [3]], wherein the incomplete intersection point ratio r2 obtained by dividing the average diameter (mm) of intersection point inscribed circles, which are inscribed circles at incomplete intersection points, by the average thickness (mm) of complete cell partition walls is 2.0 < r2 < 4.0.

A honeycomb structure according to any of [1] to [4], wherein the value obtained by dividing the average thickness w (mm) of partial cell partition walls by the average thickness o (mm) of outer peripheral wall is 0.1 < w/o < 1.0.

### Effect of the Invention

The present invention can provide a honeycomb structure which is improved in isotactic fracture strength and thermal shock resistance. Particularly when the present honeycomb structure is used as a catalyst-loaded honeycomb structure, the catalyst can be loaded uniformly and the amount of the catalyst loaded can be reduced. Accordingly, the production cost can be reduced.

### BRIEF DESCRIPTION OF THE DRAWINGS

Fig. 1 is a perspective view showing an embodiment of the honeycomb structure according to the present invention and is a schematic view.
Fig. 2 is a plan view showing an end face of a honeycomb structure and is a schematic view explaining complete cells and partial cells.
Fig. 3 is a plan view showing an end face of a honeycomb structure and is a schematic view explaining complete cells, partial cells and incomplete intersection points.
Fig. 4 is a plan view showing an embodiment of the honeycomb structure according to the present invention and is a schematic view.
Fig. 5A is a plan view showing other embodiment of the honeycomb structure according to the present invention and is a schematic view.
Fig. 5B is a plan view showing other embodiment of the honeycomb structure according to the present invention and is a schematic view explaining incomplete intersection points.
Fig. 5C is a plan view showing other embodiment of the honeycomb structure according to the present invention and is a schematic view explaining outermost intersection points.
Fig. 6 is a view explaining an intersection point and an intersection point ratio and is a schematic view.
Fig. 7 a view explaining an outermost intersection point and an outermost intersection point ratio and is a schematic view.
Fig. 8 is a view explaining an incomplete intersection point and an incomplete intersection point ratio and is a schematic view.

### EMBODIMENTS FOR CARRYING OUT THE INVENTION

The embodiments for carrying out the present invention are described below referring as necessary to the accompanying drawings. However, it should not be construed that the present invention is restricted by these embodiments. Various changes, modifications, improvements, substitutions, etc. may be added to the present invention based on the knowledge possessed by those skilled in the art, as long as the gist of the present invention is not impaired thereby. For example, the drawings indicate preferred embodiments of the present invention but the present invention is not restricted by the embodiments or information indicated by the drawings. In carrying out or verifying the present invention, there can be used the same means as described in the present Specification or means equivalent thereto, but preferably used means are those described below.

### [1] Constitution of the present honeycomb structure

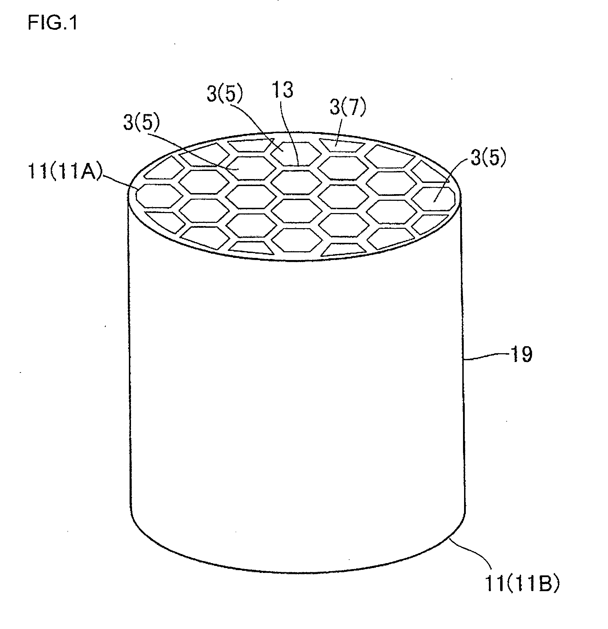

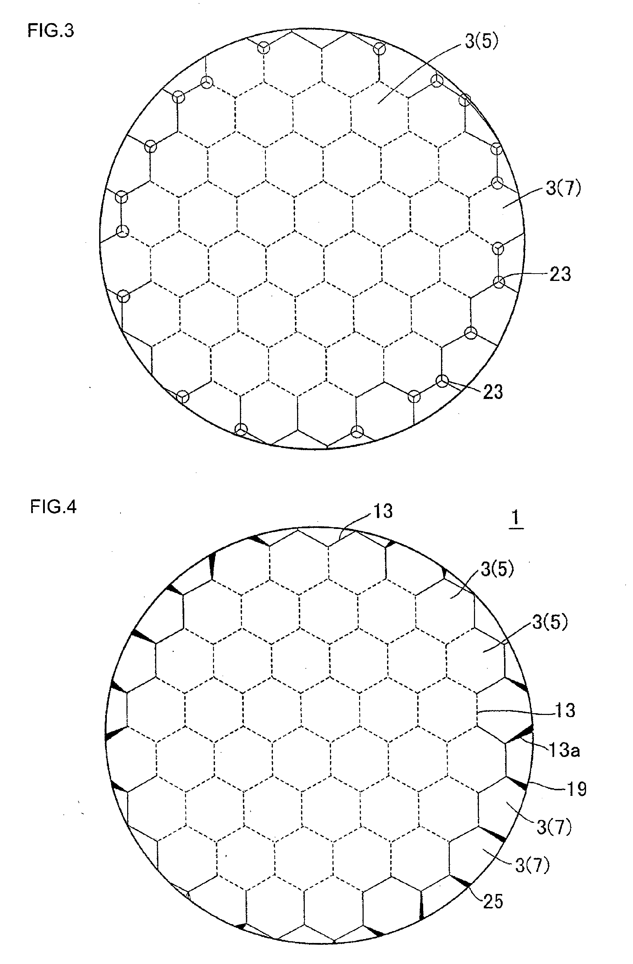

The honeycomb structure of the present invention is, as shown in Fig. 1 and Fig. 4, a honeycomb structure 1 comprising porous partition walls 13 forming a plurality of cells 3 extending between two end faces 11A and 11B and an outer peripheral wall 19 formed integrally with the partition walls 13, wherein the cells 3 comprise complete cells 5 having a hexagonal, complete cell section and partial cells 7 present at the outermost portion of the plurality of cells and having an incomplete cell section not forming a hexagon.

Further, the present honeycomb structure 1 satisfies at least one of the following (1) to (4).
(1) The partition walls of partial cells, contacting with the outer peripheral wall are formed so as to have a larger thickness than other partition walls.
(2) The partition walls of partial cells, contacting with the outer peripheral wall are formed so as to have a thickness which is larger than other partition walls constituting the partial cells and which increases gradually toward the direction of the outer peripheral wall.
(3) Intersection points between the partition wall of partial cell and the partition wall of complete cell, present at the starting points of the partial cell partition walls which extend toward the outer peripheral wall and are shorter than the complete cell partition walls, are incomplete intersection points and are formed so as to have a roundish sectional shape.
(4) Intersection points between the outer peripheral wall and the partial cell partition wall are outermost intersection points and are formed so as to have a roundish sectional shape.

Such a constitution allows the present honeycomb structure to hardly give rise to cell twist and cause no inconvenience such as product breakage during canning. That is, the present honeycomb structure can have a higher isostatic fracture strength and a higher thermal shock resistance. Further, in the present honeycomb structure, a catalyst can be coated uniformly in catalyst loading, whereby the effective use of expensive catalyst is possible and the amount of catalyst used can be reduced.

The characteristic constitution of the present honeycomb structure is described below with reference to the drawings.

### [1-1] Complete cells and partial cells

In the present honeycomb structure, the cells comprise complete cells and partial cells. Outside the partial cells (a direction of end face opposite to its center) is formed an outer peripheral wall integrally with the partition walls of partial cells.

### (Complete cells)

"Complete cells" mean cells having a hexagonal complete cell section. In other words, complete cells refer to cells which are not present at the outermost portion of end face (inlet end face or outlet end face) of honeycomb structure and in which all sides of cell section are formed satisfactorily. Further, complete cells have a hexagonal cell section. Specifically, there can be mentioned complete cell 5 having a hexagonal complete cell section, such as shown in Fig. 1, Fig. 2 or Fig. 4. Incidentally, the sectional shape of complete cell may be hexagonal and need not be a strictly regular hexagon.

### (Partial cells)

"Partial cells" refer to cells which are each partially constituted by the outer peripheral wall of honeycomb structure and which have an incomplete cell section not forming a hexagon. In other words, they are cells which are present outside the above-mentioned "complete cells" and in which the sides of cell section are not sufficient and the cell section has no hexagonal shape. Part of the cell periphery is not formed by partition wall. Specifically, there can be mentioned partial cells 7 having a cell section not forming a hexagon, such as shown in Fig. 1, Fig. 2 or Fig. 4.

### (Partition walls of partial cells)

In the present honeycomb structure 1, it is preferred that (1) the partition walls of partial cells, contacting with the outer peripheral wall are formed so as to have a larger thickness than other partition walls. Owing to such formation, the isostatic fracture strength of the honeycomb structure can be enhanced reliably.

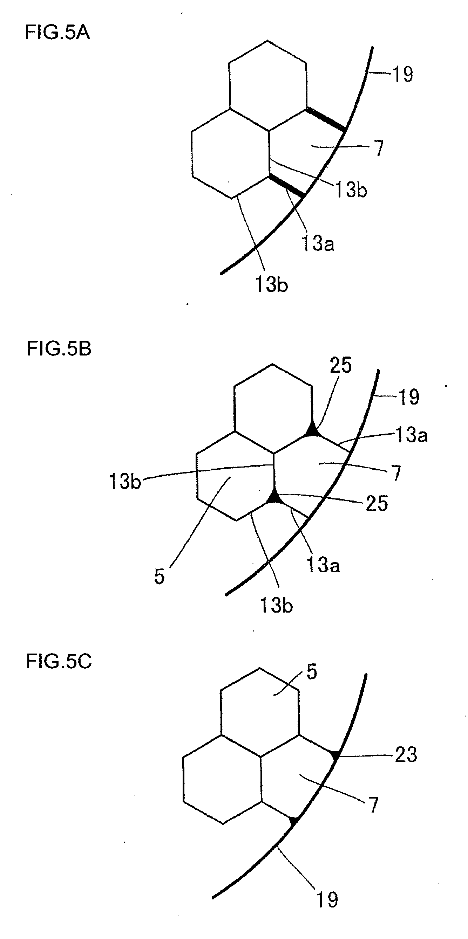

Specifically, there can be mentioned "partition walls 13a of partial cell 7, contacting with outer peripheral wall 19" having a thickness larger than partition walls 13b of partial cell 7, not contacting with the outer peripheral wall 19, such as shown in Fig. 5A. As "other partition walls", there can be mentioned other partition walls 13b excluding "partial cell partition walls 13a contacting with the outer peripheral wall", such as shown in Fig. 5A.

Also, in the present honeycomb structure 1, it is preferred that (2) the partition walls of partial cells, contacting with the outer peripheral wall are formed so as to have a thickness which is larger than other partition walls constituting the partial cells and which increases gradually toward the direction of the outer peripheral wall. Owing to such formation, the isostatic fracture strength of the honeycomb structure can be enhanced reliably.

Specifically, there can be mentioned "partition walls 13a of partial cells 7, contacting with the outer peripheral wall" formed so as to have a thickness which increases gradually toward the direction of the outer peripheral wall 19, such as shown in Fig. 4. Incidentally, in order to gradually increase the thickness of the partition wall of partial cell 7, contacting with the outer peripheral wall, the slit width of the die used is gradually increased at the slit portion corresponding to the above partition wall of partial cell 7, contacting with the outer peripheral wall.

Also, in the present honeycomb structure 1, it is preferred that (3) intersection points between the partition wall of partial cell and the partition wall of complete cell, present at the starting points of the partial cell partition walls which extend toward the outer peripheral wall and are shorter than the complete cell partition walls, are incomplete intersection points and are formed so as to have a roundish sectional shape. That is, it is preferred that each incomplete intersection point is formed so as to have a sectional shape having such a curvature that each section is dented at the periphery toward the center of section. Owing to such formation, the isostatic fracture strength of the honeycomb structure can be enhanced reliably.

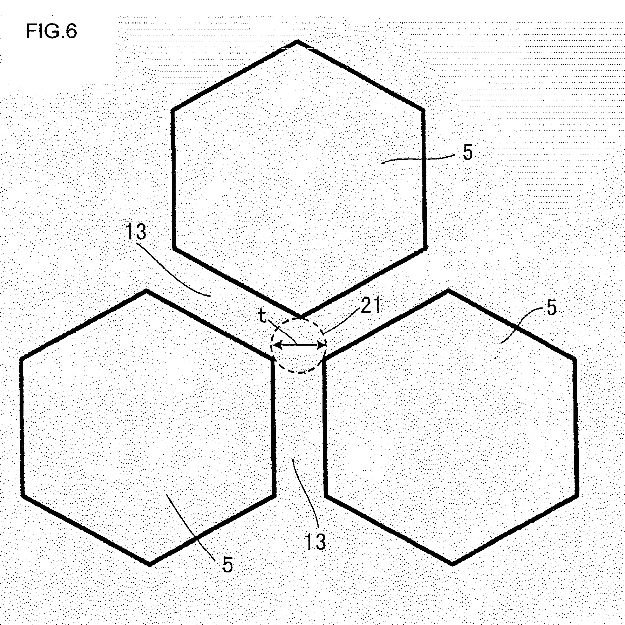

Here, '"intersection points" refer to points where partition walls intersect with each other. For example, "intersection points" where partition walls forming complete cells intersect with each other, are an intersection point such as shown in Fig. 6, wherein a partition wall 13 and other partition wall 13 each forming a complete cell 5 intersect with each other and which is shown by an inscribed circle 21. "Incomplete intersection points" refer to intersection points between the partition wall of partial cell and the partition wall of complete cell, present at the starting points of the partial cell partition walls which extend toward the outer peripheral wall and are shorter than complete cell partition walls. Specifically, there can be mentioned incomplete intersection points 25 between the partition wall 13a of partial cell 7 and the partition wall 13b of complete cell 5, present the starting points of the partial cell 7 partition walls 13a which extend toward the outer peripheral wall 19 and are shorter than the partition walls 13b, such as shown in Fig. 5B.

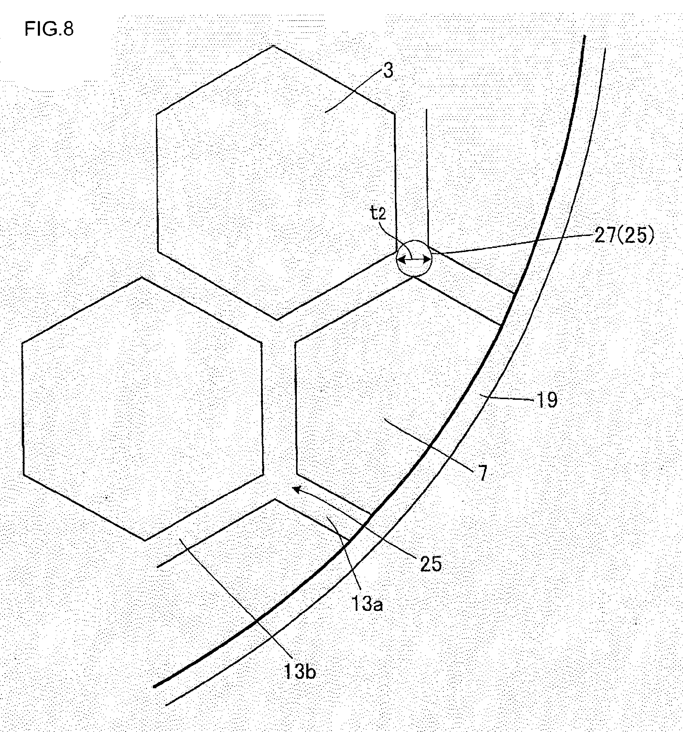

The reason for "the partial cell partition walls which extend toward the outer peripheral wall and are shorter than complete cell partition walls" is to distinguish the side corresponding to the partition wall 13b from the side corresponding to the partition wall 13a extending toward the outer peripheral wall 19. In, for example, Fig. 8, the partition wall 13b is drawn longer than the partition wall 13a extending toward the outer peripheral wall 19.

Forming each incomplete intersection point so as to have a roundish sectional shape can be conducted, for example, by allowing the portion of the die used, corresponding to the incomplete intersection point to have the same roundish sectional shape.

Also, in the present honeycomb structure 1, it is preferred that (4) intersection points between the outer peripheral wall and the partial cell partition wall are outermost intersection points and are formed so as to have a roundish sectional shape. That is, it is preferred that each outermost intersection point is formed so as to have a sectional shape having such a curvature that each section is dented at the periphery toward the center of section. Owing to such formation, the isostatic fracture strength of the honeycomb structure can be enhanced reliably.

Here, "outermost intersection points" refer to intersection points where partial cell partition walls and the outer peripheral wall intersect with each other. Specifically, there can be mentioned outermost intersection points 23 such as shown in Fig. 5C, where partition walls of partial cell 7 and the outer peripheral wall 19 intersect with each other and whose sections are formed in a roundish shape.

Forming each outermost intersection point so as to have a roundish sectional shape can be conducted, for example, by allowing the portion of the die used, corresponding to the outermost intersection point to have the same roundish sectional shape.

### (Average thickness of partial cell partition walls and average thickness of outer peripheral wall)

In the present honeycomb structure, it is preferred that the value obtained by dividing the average thickness w (mm) of partial cell partition walls by the average thickness o (mm) of outer peripheral wall is 0.1 < w/o < 1.0. When the average thickness of partial cell partition walls and the average thickness of outer peripheral wall have such a relationship, it is possible to prevent cell twist which tends to occur during the canning of honeycomb structure. As a result, the isostatic fracture strength of honeycomb structure can be enhanced.

When the value obtained by dividing the average thickness w (mm) of partial cell partition walls by the average thickness o (mm) of outer peripheral wall is smaller than 0.1, the outermost portion is too thin, causing the shortage in strength of outermost portion and the shortage in isostatic fracture strength of whole honeycomb structure. When the value obtained by dividing the average thickness w (mm) of partial cell partition walls by the average thickness o (mm) of outer peripheral wall is larger than 1.0, the outermost portion is too thick. In this case, the outermost portion is strikingly thick as compared with the complete cells present inside the partial cells, inviting a fear of low thermal shock resistance. That is, the outermost portion has too high heat capacity and a temperature difference tends to arise between the outermost portion and the portion other than the outermost portion (i.e. the inner portion where complete cells are present).

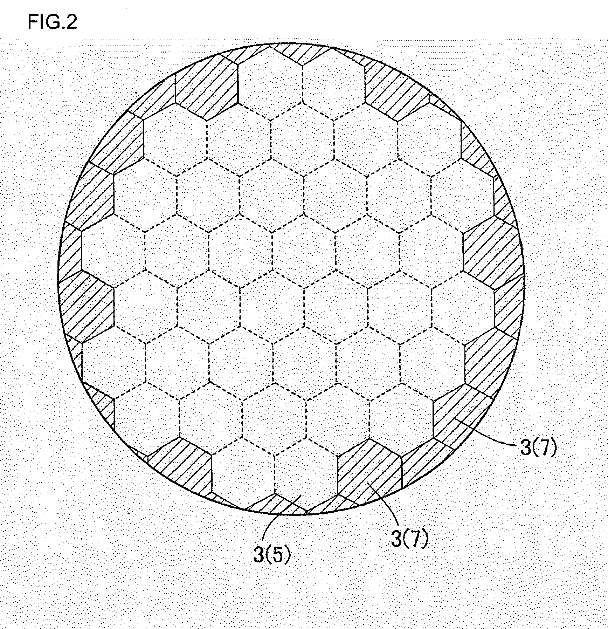

In, for example, Fig. 2, the partial cell 7 portion shown by oblique lines corresponds to "outermost portion". In, for example, Fig. 2, the portion indicated by dotted lines is complete cells 5.

The value obtained by dividing the average thickness w (mm) of partial cell partition walls by the average thickness o (mm) of outer peripheral wall is preferably 0.4 < w/o < 0.6. When the value is in this range, cell twist can be prevented reliably and a sufficient isostatic fracture strength can be obtained.

The outer peripheral wall present at the outermost portion of honeycomb structure is formed integrally with a honeycomb formed body (that is, during the formation, the outer peripheral wall and the outermost partition walls of honeycomb formed body cause sintering and there is no distinct boundary between the outer peripheral wall and the outermost partition walls). The thickness of the outer peripheral wall is preferably 0.3 to 0.7 mm, more preferably 0.4 to 0.6 mm.

### (Intersection point ratio)

"Intersection point ratio" can be determined as follows. As shown in Fig. 6, an inscribed circle 21 is drawn at an intersection point between partition walls 13 forming complete cells 5. Then, an average of the diameters t of such inscribed circles 21 (an average of the diameters of intersection point inscribed circles). This average of the diameters of intersection point inscribed circles is divided by the average thickness of complete cell 5 partition walls, and the value obtained is taken as intersection point ratio.

### (Incomplete intersection point and incomplete intersection point ratio)

In the present honeycomb structure, intersection points between the partition wall of partial cell and the partition wall of complete cell, present at the starting points of the partial cell partition walls which extend toward the outer peripheral wall and are shorter than the complete cell partition walls, are defined as incomplete intersection points. It is preferred that the incomplete intersection point ratio r2 obtained by dividing the average diameter (mm) of intersection point inscribed circles (which are inscribed circles at the incomplete intersection points) by the average thickness (mm) of complete cell partition walls is 2.0 < r2 < 4.0. With such constitution, the isostatic fracture strength and thermal shock resistance of honeycomb structure can be enhanced reliably.

When the incomplete intersection point ratio r2 is smaller than 2.0, the strength of incomplete intersection point is insufficient. When the incomplete intersection point ratio r2 is larger than 4.0, the outermost portion has too high heat capacity and a temperature difference tends to arise between the outermost portion and the portion other than the outermost portion (i.e. the inner portion where complete cells are present).

"Incomplete intersection point ratio" is determined as follows as in the case of "intersection point ratio". As shown in Fig. 8, an inscribed circle 27 is drawn at an incomplete intersection point 25. Then, an average of the diameters t2 of such inscribed circles 27 (an average of the diameters of intersection point inscribed circles). This average of the diameters of intersection point inscribed circles is divided by the average thickness of complete cell 5 partition walls, and the value obtained is taken as "incomplete intersection point ratio". When the value of "incomplete intersection point ratio r2" is larger than "1.15", each incomplete intersection point is formed so as to have a roundish sectional shape.

The incomplete intersection point ratio r2 is preferably 2.5 < r2 < 3.5. With such constitution, cell twist can be prevented reliably and the heat capacity at the outermost portion can be kept within an allowable limit.

### (Outermost intersection point and outermost intersection point ratio)

In the present honeycomb structure, it is preferred that, at the outermost intersection points formed by the outer peripheral wall and the partial cell partition walls, the outermost intersection point ratio r1 obtained by dividing the average diameter (mm) of intersection point inscribed circles (which are inscribed circles at outermost intersection points) by the average thickness (mm) of complete cell partition walls is 2.0 < r1 < 4.0. With such constitution, the outermost intersection points can be reinforced sufficiently. Incidentally, when "the outermost intersection point ratio r1" is larger than "1.15", the outermost intersection points are formed so as to have a roundish sectional shape.

When the outermost intersection point ratio r1 is smaller than 2.0, the outermost portion has insufficient strength and tends to generate cell twist. When the outermost intersection point ratio r1 is larger than 4.0, the outermost portion has too high heat capacity and a temperature difference tends to arise between the outermost portion and the portion other than the outermost portion (i.e. the inner portion where complete cells are present).

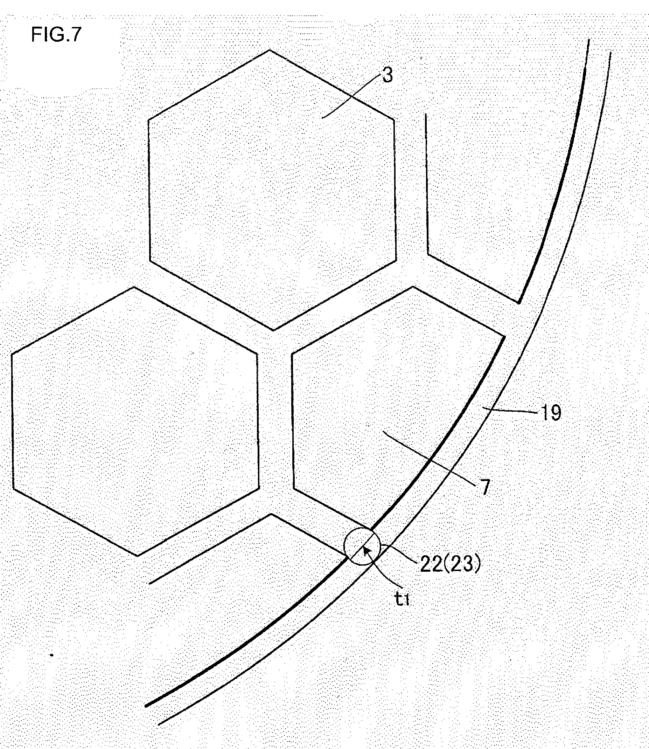

"Outermost intersection point ratio" is determined as follows as in the case of "intersection point ratio". As shown in Fig. 7, an inscribed circle 22 is drawn at an outermost intersection point 23. Then, an average of the diameters t1 of such inscribed circles 22 (an average of the diameters of intersection point inscribed circles) is determined. This average of the diameters of intersection point inscribed circles is divided by the average thickness of complete cell partition walls, and the value obtained is taken as "outermost intersection point ratio".

The outermost intersection point ratio r1 is preferably 2.5 < r1 < 3.5. With such a ratio, the outermost intersection points can be reinforced reliably.

### (Complete cell partition wall and partial cell partition wall)

In the present honeycomb structure, the value obtained by dividing the average thickness w (mm) of partial cell partition walls by the average thickness t (mm) of complete cell partition walls is 2.0 < w/t < 4.0. With such constitution, cell twist can be prevented reliably and the heat capacity of outermost portion can be kept within an allowable limit. As a result, temperature difference hardly arises between the outermost portion and the inner portion where complete cells are present, and a higher thermal shock resistance is obtained.

When the value obtained by dividing the average thickness t (mm) of complete cell partition walls by the average thickness w (mm) of partial cell partition walls is smaller than 2.0, the strength of partial cell is insufficient and cell twist arises easily. When the value obtained by dividing the average thickness t (mm) of complete cell partition walls by the average thickness w (mm) of partial cell partition walls is larger than 4.0, thermal shock resistance is hardly enhanced.

The value obtained by dividing the average thickness t (mm) of complete cell partition walls by the average thickness w (mm) of partial cell partition walls is preferably 2.5 < w/t < 3.5.

### [2] Other constitutions

Other constitutions of the present honeycomb structure are preferably as follows.

### (Thickness of partition wall)

The average thickness of complete cells may be 140 µm or smaller, or may be 100 µm or smaller. The average thickness of partial cells may be 140 µm or smaller, or may be 100 µm or smaller. When the average thickness of complete cells and the average thickness of partial cells are both as small as 140 µm or smaller, there is a fear of low strength; however, by employing strength reinforcement such as mentioned previously, a practically usable honeycomb structure of thin partition wall and hexagonal cell can be obtained.

In the present Specification, "average thickness of partition walls" is a value obtained by observing one end (or other end) of honeycomb structure using a scanning electron microscope (SEM), arbitrarily selecting 10 partition walls in the visual field, measuring their thicknesses, and calculating an average thereof.

In the present honeycomb structure, it is preferable that the cell density is 30 cells/cm² or higher but 100 cells/cm² or lower, and it is more preferable that the cell density is 30 cells/cm² or higher but lower than 100 cells/cm² and the partition wall thickness is 50 µm or larger but smaller than 310 µm. When the cell density is lower than 30 cells/cm², the efficiency of contact with exhaust gas tends to be insufficient. Meanwhile, when the cell density is higher than 100 cells/cm², the pressure loss tends to increase. When the partition wall thickness is smaller than 50 µm, the strength may be insufficient and the thermal shock resistance may be low. Meanwhile, when the partial wall thickness is 310 µm or larger, the pressure loss tends to increase.

In the present Specification, "cell density" is a value obtained by observing one end (or other end) of honeycomb structure using a scanning electron microscope (SEM), arbitrarily selecting an area of the visual field, counting the number of cells present in the area, and making a necessary calculation.

The porosity in partition wall is preferably 40% to 80%. When the porosity is smaller than 40%, sufficient coating of catalyst is difficult. When the porosity is larger than 80%, there is a problem of low material strength.

In the present Specification, "porosity in partition wall" is a value obtained by measurement using a mercury porosimeter.

### (Materials for honeycomb structure)

The materials for honeycomb structure are preferably ceramic superior in heat resistance. From this standpoint, particularly preferred are cordierite, mullite, alumina, aluminum titanate, silicon carbide and silicon nitride. Preferred from the resistance to thermal shock breakage are cordierite and aluminum titanate both low in thermal expansion.

### [3] Method for production of honeycomb structure

The honeycomb structure of the present invention can be produced, for example, as follows. However, the production method is not restricted to the following.

First, cordierite forming material is prepared as kneaded material. In preparation of the cordierite forming material, individual components are compounded so as to give a theoretical composition of cordierite crystal, and there are compounded a silica source component, a magnesia source component, an alumina source component, etc. As the silica source component, quartz or fused silica is used preferably. The particle diameter of the silica source component is preferably 100 to 150 µm.

As the magnesia source component, there can be mentioned, for example, talc and magnesite. Of these, talc is preferred. Talc is used in the cordierite forming material preferably by 37 to 43 mass %. The particle diameter (average diameter) of talc is preferably 5 to 50 µm, more preferably 10 to 40 µm. The magnesia (MgO) source component may contain, as impurities, Fe₂O₃, CaO, Na₂O, K₂O, etc.

As the alumina source component, there is preferred a component containing at least either of aluminum oxide and aluminum hydroxide, because they are low in impurities. The content of aluminum hydroxide in the cordierite forming material is preferably 10 to 30 mass %, and the content of aluminum oxide in the same materials is preferably 0 to 20 mass %.

Next, additives to be added to the cordierite forming material are prepared. A binder is used as an additive. Besides the binder, a dispersing agent and a surfactant can be used.

As the binder, there can be mentioned, for example, hydroxypropyl methyl cellulose, methyl cellulose, hydroxyethyl cellulose, carboxymethyl cellulose and polyvinyl alcohol. As the dispersing agent, there can be mentioned, for example, dextrin and polyalcohol. As the surfactant, for example, a fatty acid soap can be mentioned. Incidentally, the additives may be used singly in one kind, or in two or more kinds.

Next, with 100 mass parts of the cordierite forming material are mixed 3 to 8 mass parts of a binder, 0.1 to 2 mass parts of a dispersing agent and 10 to 40 mass parts of water, followed by kneading to prepare a kneaded material.

Next, the kneaded material is formed into a honeycomb shape by extrusion, injection, pressing or the like to obtain a green honeycomb formed body. Extrusion is used preferably because it enables easy continuous forming and can orientate, for example, cordierite crystal. Extrusion can be conducted using an apparatus such as vacuum pug mill, ram type extruder, biaxial screw type continuous extruder or the like.

Next, the honeycomb formed body is dried and adjusted to an intended size to obtain a dried honeycomb body. The drying of the honeycomb formed body can be conducted by hot-air drying, microwave drying, dielectric drying, reduced pressure drying, vacuum drying, freeze-drying, etc. A combined drying of hot-air drying and microwave or dielectric drying is preferred because it enables rapid and uniform drying of whole body.

### [4] Catalyst

As described previously, the present honeycomb structure is preferably used as a catalyst-loaded honeycomb structure obtained by loading a catalyst on the partition walls of the honeycomb structure. Owing to the catalyst, hydrocarbon (HC), carbon monoxide (CO) and nitrogen oxide (NOx) can be purified.

As the catalyst, there can be mentioned three-way catalyst (TWC), oxidation catalyst (DOC), SCR catalyst for NOx selective reduction, NOx occlusion and reduction catalyst (LNT), etc.

The three-way catalyst refers to a catalyst for purifying mainly hydrocarbon (HC), carbon monoxide (CO) and nitrogen oxide (NOx). There can be mentioned, for example, a catalyst containing platinum (Pt), palladium (Pd) or rhodium (Rh). The three-way catalyst purifies hydrocarbon into water and carbon dioxide, carbon monoxide into carbon dioxide, and nitrogen oxide into nitrogen, by oxidation or reduction.

As the SCR catalyst for NOx selective reduction, there can be mentioned a catalyst containing at least one member selected from the group consisting of metal-substituted zeolite, vanadium, titania, tungsten oxide, silver and aluminum. As the NOx occlusion catalyst, there can be mentioned, for example, alkali metal and/or alkaline earth metal. As the alkali metal, there can be mentioned K, Na, Li, etc. As the alkaline earth metal, there can be mentioned Ca, etc. The total amount of K, Na, Li and Ca is preferably 5 g or more per unit volume (1 cm³) of honeycomb structure.

### [5] Method for production of catalyst-loaded honeycomb structure

A catalyst-loaded honeycomb structure (wherein a catalyst is coated (loaded) on the present honeycomb structure) can be produced, for example, as follows. The honeycomb structure produced as above is immersed, at one end side, in a catalyst slurry and then suction is made at other end face side, whereby a catalyst is coated (loaded) on the partition walls of honeycomb structure. Then, firing is conducted, whereby a catalyst-loaded honeycomb structure can be produced.

There is no particular restriction as to the method for coating a catalyst slurry on the partition walls (loading a catalyst on the partition walls), and a known method can be used for coating. For example, first, a catalyst slurry containing a catalyst is prepared. Then, the catalyst slurry is allowed to flow into the cells of honeycomb fired body from one end face side of the body, by dipping or suction. The catalyst slurry is preferably coated on the entire surfaces of partition walls. After the catalyst slurry has been allowed to flow into the cells, the excessive slurry is blown off by compressed air. Then, the catalyst slurry is dried and baked, whereby can be obtained a catalyst-loaded honeycomb structure in which a catalyst is loaded on the partition walls.

Incidentally, the drying conditions are preferably 80 to 150°C and 1 to 6 hours. The baking conditions are preferably 450 to 700°C and 0.5 to 6 hours. As the component other than catalyst, contained in the catalyst slurry, alumina, etc. can be mentioned.

### EXAMPLES

The present invention is described specifically below by way of Examples. However, the present invention is no way restricted by these Examples.

### (Method for production of each honeycomb structure)

There were used, as the cordierite forming material, alumina, aluminum hydroxide, kaolin, talc and silica. To 100 mass parts of the cordierite forming material were added 35 mass parts of a dispersing medium, 6 mass parts of an organic binder and 0.5 mass part of a dispersing agent, followed by mixing and kneading to prepare a kneaded material. Water was used as the dispersing medium, hydroxypropyl methyl cellulose was used as the organic binder, and ethylene glycol was used as the dispersing agent.

Then, the kneaded material was extruded through a predetermined die to obtain a cylindrical honeycomb formed body. The honeycomb formed body was a honeycomb structure comprising porous partition walls forming a plurality of cells extending between one end face (inlet end face) and other end face (outlet end face) and an outer peripheral wall formed integrally with the partition walls. The cells at the inlet end face and the outlet end cell were constituted, as in the previously explained honeycomb structure, by complete cells having a hexagonal, complete cell section and partial cells having incomplete cell sections not forming a hexagon.

Then, the honeycomb formed body obtained by the extrusion was dried by a microwave drier and further dried completely by a hot-air drier. The resulting honeycomb formed body was cut at the two end faces so as to have an intended dimension.

By the above production method were produced honeycomb structures of Examples 1 to 24 and Comparative Examples 1 and 2, of 105.7mm in diameter and 114.3 mm in length between the centers of two end faces, each having "average thickness t of complete cell partition walls", "cell pitch", "average thickness w of partial cell partition walls", "average thickness o of outer peripheral wall", "w/o", "incomplete intersection point ratio r2" and "outermost intersection point ratio r1", all shown in Table 1 and Table 2. These honeycomb structures were evaluated for "isostatic fracture strength" and "electric furnace spalling property (ESP)", as shown below. The results are shown in Table 1 and Table 2.

In Table 1 and Table 2, "w/t is 1.00" indicates that "average thickness of partial cell partition walls" is the same as "average thickness of complete cell partition walls". "Thickness of partial cell partition wall is uniform" indicates that partial cell partition walls are formed in a uniform thickness. "Thickness of partial cell partition wall shows gradual increase" indicates that partial cell partition walls are formed so that their thicknesses increase gradually toward the outer peripheral wall. "Incomplete intersection point ratio r2 is 1.15" indicates that incomplete intersection points are not formed so as to have a roundish sectional shape. "Outermost intersection point ratio r1 is 1.15" indicates that outermost intersection points are not formed so as to have a roundish sectional shape.

### (Evaluation of isostatic fracture strength)

Isostatic fracture strength is measured based on the test for isostatic fracture strength, specified by M505-87 which is an automobile standard (JASO standard) issued by Society of Automotive Engineers of Japan, Inc. Isostatic fracture strength is tested by placing a honeycomb structure in a rubber-made cylindrical container, covering the container with an aluminum-made plate, and applying an isostatic pressure thereto in water. Isostatic fracture strength (isostatic strength) is indicated as a pressure (MPa) applied when the honeycomb structure fractures. An isostatic strength of 1.00 MPa or above is taken as "pass" and is shown by "O" in Table. When the isostatic strength is "pass" but exceeds 1.5 MPa, it is superior and is shown by "⊚" in Table. An isostatic strength of smaller than 1.00 MPa is taken as "fail" and is shown by "X" in Table. Incidentally, the isostatic structure strength test is a simulation test for examining the compression load of a honeycomb structure when it is mounted in an automobile in a state accommodated in a casing with the outer surface held by the casing.

### (Evaluation of electric furnace spalling property (ESP))

A honeycomb structure of room temperature was placed in an electric furnace kept at a temperature higher than room temperature by a given level and stored therein for 20 minutes. Then, the honeycomb structure was taken out and allowed to stand on a firebrick for at least 15 minutes to cool it to room temperature. The appearance of the honeycomb structure was observed and the outer periphery thereof was tapped with a metal rod to evaluate the thermal shock resistance. When there was no crack in the honeycomb structure and the tapping sound was not dull but was a metallic sound, the ESP of the honeycomb structure was as "pass". This operation was repeated by increasing the inside temperature of electric furnace at 50°C intervals, until the inside temperature reached 800°C. When there was no abnormality in appearance and tapping sound even at 700°C, the ESP was taken as "pass" and shown by "○". When there was no abnormality in appearance and tapping sound even at 800°C, the ESP was taken as "superior" and shown by "⊚" in Table. When there was abnormality in appearance and tapping sound before reaching 700°C, the ESP was taken as "fail" and shown by "X" in Table.

**Table 1**

| | Average thickness of complete cell partition walls, t | Cell pitch | Average thickness of partial cell partition walls, w | W/t | Thickness of partial cell partition wall | Average thickness of outer wall, o | w/o | Incomplete intersection point ratio, r2 | Outermost intersection point ratio, r1 | Isostatic fracture strength | Safe temp. of ESP | Evaluation of isostatic fracture strength | Evaluation of ESP |
|---|---|---|---|---|---|---|---|---|---|---|---|---|---|
| (Unit) | (mm) | (mm) | (mm) | (-) | (-) | (mm) | (-) | (-) | (-) | (MPa) | (°C) | (-) | (-) |
| Ex. 1 | 0.0635 | 1.037 | 0.0826 | 1.30 | Uniform | 0.25 | 0.33 | 1.15 | 1.15 | 1.20 | 700 | ○ | ○ |
| Ex. 2 | 0.0635 | 1.037 | 0.0826 | 1.30 | Uniform | 0.50 | 0.17 | 4.50 | 4.50 | 1.35 | 700 | ○ | ○ |
| Ex. 3 | 0.0635 | 1.037 | 0.0230 | 0.36 | Gradual increase | 0.350 | - | 1.15 | 1.15 | 1.02 | 700 | ○ | ○ |
| Ex. 4 | 0.0635 | 1.037 | 0.127 | 2.00 | Uniform | 0.50 | 0.07 | 1.15 | 3.10 | 1.32 | 750 | ○ | ○ |
| Ex. 5 | 0.0635 | 1.037 | 0.159 | 2.50 | Uniform | 0.45 | 0.06 | 2.20 | 1.15 | 1.25 | 750 | ○ | ○ |
| Ex. 6 | 0.0635 | 1.037 | 0.191 | 3.00 | Uniform | 0.16 | 1.20 | 4.30 | 2.10 | 1.30 | 750 | ○ | ○ |
| Ex. 7 | 0.0635 | 1.037 | 0.222 | 3.50 | Uniform | 0.19 | 1.20 | 2.50 | 4.40 | 1.36 | 750 | ○ | ○ |
| Ex. 8 | 0.0635 | 1.037 | 0.0826 | 1.30 | Uniform | 1.03 | 0.08 | 2.20 | 2.20 | 1.52 | 700 | ⊚ | ○ |
| Ex. 9 | 0.0635 | 1.037 | 0.0826 | 1.30 | Uniform | 0.06 | 1.30 | 2.50 | 2.40 | 1.13 | 800 | ○ | ⊚ |
| Ex. 10 | 0.0635 | 1.037 | 0.241 | 3.80 | Uniform | 0.30 | 0.80 | 3.50 | 1.15 | 1.45 | 800 | ○ | ⊚ |
| Ex. 11 | 0.0635 | 1.037 | 0.127 | 2.00 | Uniform | 0.25 | 0.51 | 1.15 | 3.80 | 1.43 | 800 | ○ | ⊚ |
| Ex. 12 | 0.0635 | 1.037 | 0.127 | 2.00 | Uniform | 0.25 | 0.51 | 3.00 | 4.30 | 3.10 | 700 | ⊚ | ○ |
| Ex. 13 | 0.0889 | 1.037 | 0.1778 | 2.00 | Uniform | 0.22 | 0.81 | 4.30 | 3.20 | 4.50 | 700 | ⊚ | ○ |
| Ex. 14 | 0.0889 | 1.037 | 0.1778 | 2.00 | Uniform | 1.22 | 0.50 | 2.60 | 3.20 | 4.50 | 800 | ⊚ | ⊚ |
| Ex. 15 | 0.0635 | 1.037 | 0.191 | 3.00 | Gradual increase | 0.30 | - | 2.20 | 4.30 | 3.20 | 700 | ⊚ | ○ |
| Ex. 16 | 0.0635 | 1.037 | 0.191 | 3.00 | Gradual increase | 1.00 | - | 4.20 | 2.60 | 3.70 | 700 | ⊚ | ○ |
| Ex. 17 | 0.0635 | 1.037 | 0.191 | 3.00 | Gradual increase | 1.70 | - | 2.30 | 1.20 | 1.10 | 800 | ○ | ⊚ |
| Ex. 18 | 0.0635 | 1.037 | 0.191 | 3.00 | Gradual increase | 2.40 | - | 1.30 | 2.60 | 1.40 | 800 | ○ | ⊚ |
| Ex. 19 | 0.0635 | 1.037 | 0.0635 | 1.00 | Uniform | 0.25 | 0.25 | 1.15 | 1.30 | 1.20 | 700 | ○ | ⊚ |
| Ex. 20 | 0.0635 | 1.037 | 0.0635 | 1.00 | Uniform | 0.25 | 0.25 | 1.30 | 1.15 | 1.20 | 700 | ○ | ○ |
| EX. 21 | 0.0635 | 1.037 | 0.0635 | 1.00 | Uniform | 0.25 | 0.25 | 1.30 | 1.30 | 1.35 | 700 | ○ | ○ |
| Ex. 22 | 0.0635 | 1.037 | 0.191 | 3.01 | Uniform | 0.25 | 0.76 | 1.15 | 1.15 | 1.30 | 700 | ○ | ○ |
| Ex. 23 | 0.0635 | 1.037 | 0.0635 | 1.00 | Uniform | 0.25 | 0.25 | 1.15 | 2.20 | 1.50 | 700 | ⊚ | ○ |
| Ex. 24 | 0.0635 | 1.037 | 0.0635 | 1.00 | Uniform | 0.25 | 0.25 | 2.20 | 1.15 | 1.50 | 700 | ⊚ | ○ |

**Table 2**

| | Average thickness of complete cell partition walls, t | Cell pitch | Average thickness of partial cell partition walls, w | W/t | Thickness of Partial cell partition wall | Average thickness of outer wall, o | w/o | Incomplete intersection point ratio, r2 | Outermost intersection point ratio, r1 | Isostatic fracture strength | Safe temp. of ESP | Evaluation of isostatic fracture strength | Evaluation of ESP |
|---|---|---|---|---|---|---|---|---|---|---|---|---|---|
| (Unit) | (mm) | (mm) | (mm) | (-) | (-) | (mm) | (-) | (-) | (-) | (MPa) | (°C) | (-) | (-) |
| Comp. Ex. 1 | 0.0635 | 1.037 | 0.0635 | 1.00 | Uniform | 0.635 | 0.10 | 1.15 | 1.15 | 0.70 | 600 | X | X |
| Comp. Ex. 2 | 0.0635 | 1.037 | 0.0230 | 0.36 | Uniform | 0.250 | 0.09 | 1.15 | 1.15 | 0.60 | 600 | X | X |

### (Discussion)

In Examples 1 to 24, good results could be obtained in "Evaluation of isostatic fracture strength" as well as in "Evaluation of electric furnace spalling property (ESP)". Particularly in Example 14, the most excellent results could be obtained, improvement in "isostatic fracture strength" was obtained, and improvement in thermal shock resistance could be confirmed. Meanwhile, in Comparative Examples 1 and 2, isostatic fracture strength was insufficient and improvement in thermal shock resistance could not be confirmed.

### INDUSTRIAL APPLICABILITY

The honeycomb structure according to the present invention can be suitably used as a carrier for the filter used for purification of the fine particles and harmful gas components contained in the exhaust gas emitted from internal combustion engines of automobiles, industrial machines, etc. The honeycomb structure has both temperature elevation property and mechanical strength and allows for reduction in catalyst use amount as well as for larger area for catalyst loading.

### EXPLANATION OF SYMBOLS

1: honeycomb structure, 3: cell, 5: complete cell, 7: partial cell, 11: end face, 11A: inlet end face, 11B: outlet end face, 13: partition wall, 13a: partition wall, 13b: partition wall, 19: outer peripheral wall, 21: inscribed circle, 22: inscribed circle, 23: outermost intersection point, 25: incomplete intersection point, 27: inscribed circle, t, t1 and t2: each a diameter

## Claims

1. A honeycomb structure comprising porous partition walls forming a plurality of cells extending between the two end faces and an outer peripheral wall formed integrally with the partition walls, wherein the cells comprise complete cells having a hexagonal, complete cell section and partial cells present at the outermost portion of the plurality of cells and having an incomplete cell section not forming a hexagon, the honeycomb structure satisfying at least one of following conditions (1) to ( 4):
(1) The partition walls of partial cells, contacting with the outer peripheral wall are formed so as to have a larger thickness than other partition walls,
(2) The partition walls of partial cells, contacting with the outer peripheral wall are formed so as to have a thickness which is larger than other partition walls constituting the partial cells and which increases gradually toward the direction of the outer peripheral wall,
(3) Intersection points between the partition wall of partial cell and the partition wall of complete cell, present at the starting points of the partial cell partition walls which extend toward the outer peripheral wall and are shorter than the complete cell partition walls, are incomplete intersection points and are formed so as to have a roundish sectional shape,
(4) Intersection points between the outer peripheral wall and the partial cell partition wall are outermost intersection points and are formed so as to have a roundish sectional shape.

2. A honeycomb structure according to Claim 1, wherein the value obtained by dividing the average thickness w (mm) of partial cell partition walls by the average thickness t (mm) of complete cell partition walls is 2.0 < w/t < 4.0.

3. A honeycomb structure according to Claim 1 or 2, wherein the outermost intersection point ratio r1 obtained by dividing the average diameter (mm) of intersection point inscribed circles, which are inscribed circles at outermost intersection points, by the average thickness (mm) of complete cell partition walls is 2.0 < r1 < 4.0.

4. A honeycomb structure according to any of Claims 1 to 3, wherein the incomplete intersection point ratio r2 obtained by dividing the average diameter (mm) of intersection point inscribed circles, which are inscribed circles at incomplete intersection points, by the average thickness (mm) of complete cell partition walls is 2.0 < r2 < 4.0.

5. A honeycomb structure according to any of Claims 1 to 4, wherein the value obtained by dividing the average thickness w (mm) of partial cell partition walls by the average thickness ○ (mm) of outer peripheral wall is 0.1 < w/o < 1.0.

## Patentansprüche

1. Wabenstruktur, die poröse Trennwände, die eine Vielzahl von Zellen ausbilden, die sich zwischen den zwei Stirnflächen erstrecken, und eine Außenrandwand, die einstückig mit den Trennwänden ausgebildet ist, umfasst, worin die Zellen vollständige Zellen mit einem sechseckigen, vollständigen Zellenabschnitt und Teilzellen, die sich im äußersten Abschnitt der Vielzahl von Zellen befinden und einen unvollständigen Zellenabschnitt aufweisen, der kein Sechseck bildet, umfassen, wobei die Wabenstruktur zumindest eine der folgenden Bedingungen (1) bis (4) erfüllt:
(1) Die Trennwände von Teilzellen, die die Außenrandwand berühren, sind so ausgebildet, dass sie eine größere Dicke aufweisen als andere Trennwände;
(2) die Trennwände von Teilzellen, die die Außenrandwand berühren, sind so ausgebildet, dass sie eine Dicke aufweisen, die größer ist als die anderer Trennwände, die die Teilzellen bilden, und die sich schrittweise in Richtung der Außenrandwand erhöht;
(3) die Schnittpunkte zwischen der Trennwand von Teilzellen und der Trennwand der vollständigen Zelle, die sich am Beginn der jeweiligen Teilzellentrennwände befinden, die sich in Richtung der Außenrandwand erstrecken und kürzer sind als die Trennwände der vollständigen Zellen, sind unvollständige Schnittpunkte und so ausgebildet, dass sie eine rundliche Abschnittsform aufweisen;
(4) die Schnittpunkte zwischen der Außenrandwand und den Teilzellentrennwänden sind die äußersten Schnittpunkte und so ausgebildet, dass sie eine rundliche Abschnittsform aufweisen.

2. Wabenstruktur nach Anspruch 1, worin der beim Dividieren der durchschnittlichen Dicke w (mm) der Teilzellentrennwände durch die durchschnittliche Dicke t (mm) der Trennwände der vollständigen Zellen erhaltene Wert 2,0 < w/t < 4,0 ist.

3. Wabenstruktur nach Anspruch 1 oder 2, worin das beim Dividieren des durchschnittlichen Durchmessers (mm) von Schnittpunkten eingeschriebenen Kreisen, die eingeschriebene Kreise an den äußersten Schnittpunkten sind, durch die durchschnittliche Dicke (mm) der Trennwände der vollständigen Zellen erhaltene Verhältnis r1 der äußersten Schnittpunkte 2,0 < r1 < 4,0 ist.

4. Wabenstruktur nach einem der Ansprüche 1 bis 3, worin das beim Dividieren des durchschnittlichen Durchmessers (mm) von Schnittpunkten eingeschriebenen Kreisen, die eingeschriebene Kreise an den unvollständige Schnittpunkten sind, durch die durchschnittliche Dicke (mm) der Trennwände der vollständigen Zellen erhaltene Verhältnis r2 der unvollständigen Schnittpunkte 2,0 < r2 < 4,0 ist.

5. Wabenstruktur nach einem der Ansprüche 1 bis 4, worin der beim Dividieren der durchschnittlichen Dicke w (mm) der Teilzellentrennwände durch die durchschnittliche Dicke o (mm) der Außenrandwand erhaltene Wert 0,1 < w/o < 1,0 ist.

## Revendications

1. Structure en nid d'abeilles comprenant des parois de séparation poreuses formant une pluralité de cellules s'étendant entre les deux faces d'extrémité et une paroi périphérique extérieure formée d'un seul tenant avec les parois de séparation, dans laquelle les cellules comprennent des cellules complètes ayant une section de cellule hexagonale complète et des cellules partielles présentes dans la partie la plus à l'extérieur de la pluralité de cellules et ayant une section de cellule incomplète ne formant pas un hexagone, la structure en nid d'abeilles satisfaisant à au moins l'une des conditions (1) à (4) suivantes :
(1) les parois de séparation de cellules partielles en contact avec la paroi périphérique extérieure sont formées de manière à avoir une plus grande épaisseur que les autres parois de séparation,
(2) les parois de séparation de cellules partielles en contact avec la paroi périphérique extérieure sont formées de manière à avoir une épaisseur qui est plus grande que celle des autres parois de séparation constituant les cellules partielles et qui augmente graduellement dans la direction de la paroi périphérique extérieure,
(3) les points d'intersection entre la paroi de séparation de cellule partielle et la paroi de séparation de cellule complète, présents aux points de début des parois de séparation de cellules partielles qui s'étendent vers la paroi périphérique extérieure et qui sont plus courtes que les parois de séparation de cellules complètes, sont des points d'intersection incomplets et sont formés de manière à présenter une forme en coupe arrondie,
(4) les points d'intersection entre la paroi périphérique extérieure et la paroi de séparation de cellule partielle sont les points d'intersection les plus à l'extérieur et sont formés de manière à présenter une forme en coupe arrondie.

2. Structure en nid d'abeilles selon la revendication 1, dans laquelle la valeur obtenue en divisant l'épaisseur moyenne w (mm) des parois de séparation de cellules partielles par l'épaisseur moyenne t (mm) des parois de séparation de cellules complètes satisfait à 2,0 < w/t < 4,0.

3. Structure en nid d'abeilles selon la revendication 1 ou 2, dans laquelle le rapport de point d'intersection le plus à l'extérieur r1 obtenu en divisant le diamètre moyen (mm) des cercles inscrits aux points d'intersection qui sont des cercles inscrits au niveau des points d'intersection les plus à l'extérieur, par l'épaisseur moyenne (mm) des parois de séparation de cellules complètes satisfait à 2,0 < r1 < 4,0.

4. Structure en nid d'abeilles selon l'une quelconque des revendications 1 à 3, dans laquelle le rapport de point d'intersection incomplet r2 obtenu en divisant le diamètre moyen (mm) des cercles inscrits aux points d'intersection, qui sont des cercles inscrits au niveau des points d'intersection incomplets, par l'épaisseur moyenne (mm) des parois de séparation de cellules complètes satisfait à 2,0 < r2 < 4,0.

5. Structure en nid d'abeilles selon l'une quelconque des revendications 1 à 4, dans laquelle la valeur obtenue en divisant l'épaisseur moyenne w (mm) des parois de séparation de cellules partielles par l'épaisseur moyenne o (mm) de la paroi périphérique extérieure satisfait à 0,1 < w/o < 1,0.
